# DEMANDE DE BREVET EUROPEEN

(11) **EP 1 804 464 A1**
(43) Date de publication de la demande: **04.07.2007**
(21) Numéro de dépôt: 06301259.5
(22) Date de dépôt: 15.12.2006
(51) Int. Cl.: H04L 29/06

(54) **Procédé et appareil pour localiser un utilisateur dans un réseau de type IMS**

(30) Priorité: 29.12.2005 FR 0554128
(71) Demandeur: Alcatel Lucent, 75008 Paris (FR)
(72) Inventeur: Durecu, Olivier, 91460, MARCOUSSIS (FR); Bazin, Claire, 75014, PARIS (FR)

(57) **Abrégé**

L'invention concerne un procédé de localisation d'un utilisateur dans un réseau de type IMS auquel ledit utilisateur peut se connecter par l'intermédiaire de plusieurs terminaux, ledit procédé prévoyant d'insérer, au niveau de la fonction P-CSCF du réseau, une information relative au type d'accès de l'utilisateur lorsque celui-ci se connecte avec un terminal, et d'intégrer audit réseau un moyen de localisation qui est apte à mémoriser d'une part l'information du P-CSCF relative au type d'accès et d'autre part l'identité publique IMPU et l'adresse IP de l'utilisateur à partir de la fonction S-CSCF dudit réseau, de sorte que ledit moyen soit apte à diriger dans le réseau une requête de localisation vers l'information de localisation adéquate.

## Description

L'invention concerne un procédé de localisation d'un utilisateur dans un réseau de type IMS auquel ledit utilisateur peut se connecter par l'intermédiaire de plusieurs terminaux, ainsi qu'un réseau de type IMS comprenant différents types d'accès audit réseau au moyen de terminaux.

Le développement des télécommunications a permis qu'un nombre croissant d'utilisateurs disposent d'un ou plusieurs terminaux, tels que des téléphones portables, des ordinateurs ou des assistants personnels numériques, pouvant communiquer via un ou plusieurs réseaux de communication de nature différente, c'est-à-dire utilisant des protocoles de communication distincts.

Pour permettre la communication entre des réseaux opérant sous différents protocoles, une architecture standardisée dite IMS (pour Internet Protocole Multimedia Subsystem) a été développée sous le standard 3GPP.

Un réseau IMS utilise un protocole dénommé IP (pour Internet Protocol) qui lui permet notamment de transmettre des informations sous la forme de paquets, chaque paquet comprenant un entête indiquant une adresse IP du destinataire des paquets de telle sorte que les paquets peuvent suivre différents chemins pour parvenir au destinataire. Le protocole IP permet au réseau IMS de recevoir ou de transmettre des informations de différents réseaux associés à ce réseau IMS et codées sous différents protocoles propres à chacun de ces réseaux.

Dans un réseau de type IMS, un utilisateur possède plusieurs identités publiques IMS (IMPU) en fonction du terminal avec lequel il se connecte et/ou de l'identifiant qu'il utilise sur un terminal donné. En particulier, un utilisateur peut se connecter au réseau IMS indifféremment par différents types d'accès, tant cellulaire (identifiant sous forme d'un numéro d'abonné MSISDN), de type WLAN (identifiant sous forme d'une adresse IP) ou fixe.

Par ailleurs, un réseau de type IMS peut comprendre des serveurs de localisation des utilisateurs qui sont spécifiques au type d'accès par lequel l'utilisateur se connecte. En effet, la localisation dans un type d'accès, ainsi que la façon de récupérer cette localisation, sont fonction de la nature dudit accès.

Le problème qui se pose est que les services IMS du réseau, qui sont basés sur la localisation, ne connaissent pas le type d'accès actif d'un utilisateur ni son identifiant associé, de sorte qu'ils ne peuvent pas récupérer la localisation dudit utilisateur.

L'invention a pour but de pallier ce problème en proposant notamment d'intégrer dans un réseau de type IMS un moyen de localisation qui est apte à diriger une requête de localisation émise par un service vers l'information pertinente de localisation d'un utilisateur actif.

A cet effet, et selon un premier aspect, l'invention propose un procédé de localisation d'un utilisateur dans un réseau de type IMS auquel ledit utilisateur peut se connecter par l'intermédiaire de plusieurs terminaux, ledit procédé prévoyant d'insérer, au niveau de la fonction P-CSCF du réseau, une information relative au type d'accès de l'utilisateur lorsque celui-ci se connecte avec un terminal, et d'intégrer audit réseau un moyen de localisation qui est apte à mémoriser d'une part l'information du P-CSCF relative au type d'accès et d'autre part l'identité publique IMPU et l'adresse IP de l'utilisateur à partir de la fonction S-CSCF dudit réseau, de sorte que ledit moyen soit apte à diriger dans le réseau une requête de localisation vers l'information de localisation adéquate.

Ainsi, le moyen de localisation, en bénéficiant en temps réel du type d'accès d'un utilisateur enregistré, peut diriger la requête de localisation vers le serveur de localisation correspondant au type d'accès pertinent qui est en cours d'utilisation.

Selon un deuxième aspect, l'invention propose un réseau de type IMS comprenant différents types d'accès audit réseau au moyen de terminaux, ledit réseau comprenant une fonction P-CSCF apte à contenir une information relative aux types d'accès au réseau, et un moyen de localisation qui, lors de la connexion d'un utilisateur, est apte à recueillir d'une part l'information relative au type d'accès à partir du P-CSCF et d'autre part l'identité publique IMPU et l'adresse IP de l'utilisateur à partir du S-CSCF, de sorte que ledit moyen soit apte à diriger une requête de localisation vers l'information de localisation adéquate.

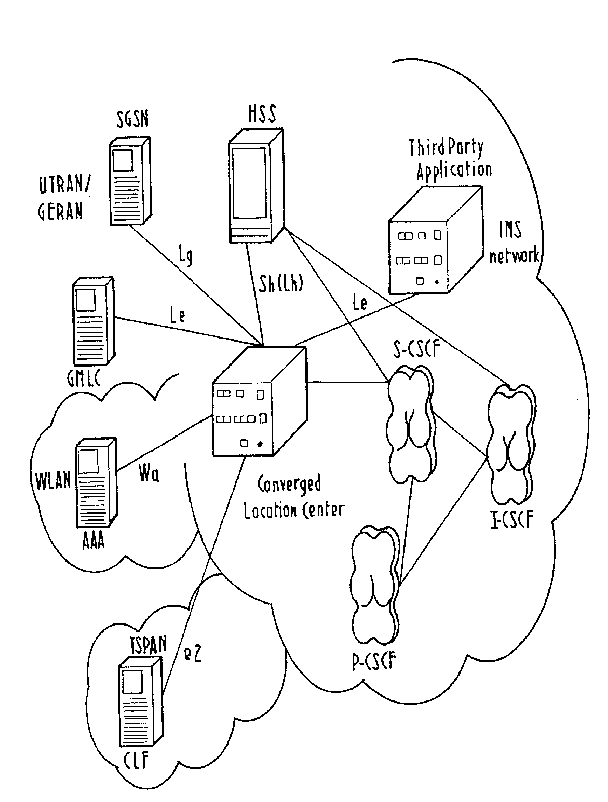

D'autres particularités et avantages de l'invention apparaîtront dans la description qui suit de différents modes de réalisation particuliers, description faite en relation avec la figure jointe qui montre l'architecture générale d'un réseau IMS selon un mode de réalisation de l'invention.

Sur la figure, est schématisé un réseau IMS (IMS network) qui comprend classiquement plusieurs serveurs SIP (pour Session Initiation Protocol) qui sont désigné collectivement sous le nom de CSCF (pour Call Session Control Function).

En particulier, le P-CSCF (pour Proxy-CSCF) est le premier point de contact dans le réseau IMS pour un terminal de connexion. En outre, le I-CSCF (pour Interrogating-CSCF) est chargé de trouver le S-CSCF (pour Serving-CSCF) lors d'un enregistrement qui lui-même prend en charge l'identification de l'utilisateur qui s'enregistre.

En outre, le réseau IMS comprend un équipement de stockage d'informations de type HSS (pour Home Subscriber Serveur) qui communique avec le S-CSCF.

Par ailleurs, la figure schématise également trois ensembles de type de connexion au réseau IMS, respectivement UTRAN/GERAN pour une connexion cellulaire, WLAN pour une connexion IP et TISPAN pour une connexion fixe.

Pour chacun de ces types d'accès, la figure représente des serveurs de localisation de l'utilisateur connecté, à savoir dénommés GMLC (pour Gateway Mobile Location Center), AAA (pour Authentication, Authorization, and Accounting) et CLF (pour Connectivity Session Location Function) respectivement pour les types d'accès dans l'ordre mentionné ci-dessus. En outre, chacun de ces serveurs communiquent par l'intermédiaire d'interfaces Lg, Le, Wa et e2 respectivement.

Selon l'invention, le réseau IMS comprend également un moyen de localisation (dénommé Converged Location Center sur la figure) qui est connecté à chacun des serveurs de localisation par l'intermédiaire de leurs interfaces respectives, ainsi qu'au serveur HSS.

En outre, le moyen de localisation est connecté au S-CSCF pour, lors de la connexion d'un utilisateur, recueillir l'identité publique IMPU de l'utilisateur et son adresse IP dans le réseau IMS. En particulier, le moyen de localisation peut recueillir ces informations en notifiant lors de l'enregistrement, en particulier lors du processus d'identification d'un utilisateur (third party registration mechanism) mis en oeuvre par le S-CSCF, de les extraire du message du registre.

Par conséquent, en prévoyant que la fonction P-CSCF soit apte à contenir une information relative aux types d'accès au réseau (UTRAN, GERAN, WLAN, TISPAN), et en mémorisant cette information dans le moyen de localisation, il est possible de diriger une requête de localisation vers l'information de localisation du serveur adéquate grâce au moyen de localisation. En particulier, le moyen de localisation peut être apte à recueillir l'information de localisation pertinente.

Selon une réalisation, le moyen de localisation peut être intégré dans un serveur existant, en particulier au GMLC qui comprend la plupart des interfaces nécessaire à son implémentation.

On décrit ci-dessous plusieurs modes de réalisation d'un procédé de localisation d'un utilisateur dans un tel réseau IMS.

Le procédé prévoit d'insérer, au niveau de la fonction P-CSCF du réseau, une information relative au type d'accès de l'utilisateur lorsque celui-ci se connecte avec un terminal.

En outre, le procédé prévoit d'intégrer audit réseau un moyen de localisation qui est apte à mémoriser d'une part l'information du P-CSCF relative au type d'accès et d'autre part l'identité publique IMPU et l'adresse IP de l'utilisateur à partir de la fonction S-CSCF dudit réseau.

Ainsi, le moyen de localisation est apte à diriger dans le réseau une requête de localisation vers l'information de localisation adéquate, à savoir celle du serveur correspondant au type d'accès par l'intermédiaire duquel l'utilisateur est connecté.

Selon une réalisation, le moyen de localisation active l'interface Sh du réseau vers le serveur HSS dudit réseau, afin de localiser un utilisateur connecté par un accès MSISDN (Mobile station ISDN number) grâce à son identité publique IMPU. Ainsi, le MSISDN d'un utilisateur connecté à un réseau d'accès UTRAN/GERAN est récupéré à partir de son IMPU.

Selon une autre réalisation, le moyen de localisation active l'interface Le en cas de requête de localisation d'une tierce application (Third Party Application sur la figure) de sorte à offrir une interface standardisée pour ladite requête.

Le procédé peut également prévoir que le moyen de localisation active l'interface du serveur de localisation des différents accès au réseau, de sorte à leur demander la localisation de l'utilisateur. En particulier, l'interface Lh vers le HSS, l'interface Le vers le GMLC, l'interface Lg vers le SGSN, l'interface e2 vers le TISPAN CLF et l'interface Wa vers le WLAN AAA.

Selon l'invention, une tierce application peut donc requérir la localisation d'un utilisateur au moyen de son identité dans le réseau IMS. Le moyen de localisation peut ainsi associer cette identité à une adresse IP ou à un numéro MSISDN, et requérir, au serveur de localisation associé à l'accès au réseau adéquat, la localisation de l'utilisateur.

Ainsi, uniquement sur la base de l'identité IMS d'un utilisateur, l'opérateur du réseau IMS peut récupérer la localisation la plus adaptée, sans connaître, a priori, à quel accès l'utilisateur est connecté ni avec quel identifiant il s'est connecté.

## Revendications

1. Procédé de localisation d'un utilisateur dans un réseau de type IMS auquel ledit utilisateur peut se connecter par l'intermédiaire de plusieurs terminaux, ledit procédé prévoyant d'insérer, au niveau de la fonction P-CSCF du réseau, une information relative au type d'accès de l'utilisateur lorsque celui-ci se connecte avec un terminal, et d'intégrer audit réseau un moyen de localisation qui est apte à mémoriser d'une part l'information du P-CSCF relative au type d'accès et d'autre part l'identité publique IMPU et l'adresse IP de l'utilisateur à partir de la fonction S-CSCF dudit réseau, de sorte que ledit moyen soit apte à diriger dans le réseau une requête de localisation vers l'information de localisation adéquate.

2. Procédé de localisation selon la revendication 1, dans lequel le moyen de localisation active l'interface Sh du réseau vers un équipement de stockage d'informations (HSS) dudit réseau, afin de localiser un utilisateur connecté par un accès MSISDN grâce à son identité publique IMPU.

3. Procédé de localisation selon la revendication 1 ou 2, dans lequel le moyen de localisation active l'interface Le en cas de requête de localisation d'une tierce application.

4. Procédé de localisation selon l'une quelconque des revendications 1 à 3, dans lequel le moyen de localisation active l'interface du serveur de localisation des différents accès au réseau, de sorte à leur demander la localisation de l'utilisateur.

5. Réseau de type IMS comprenant différents types d'accès audit réseau au moyen de terminaux, ledit réseau comprenant une fonction P-CSCF apte à contenir une information relative aux types d'accès au réseau, et un moyen de localisation qui, lors de la connexion d'un utilisateur, est apte à recueillir d'une part l'information relative au type d'accès à partir du P-CSCF et d'autre part l'identité publique IMPU et l'adresse IP de l'utilisateur à partir du S-CSCF, de sorte que ledit moyen soit apte à diriger une requête de localisation vers l'information de localisation adéquate.

6. Réseau de type IMS selon la revendication 5, **caractérisé en ce que** le moyen de localisation est intégré au GMLC dudit réseau.
